# EUROPÄISCHE PATENTSCHRIFT

(11) **EP 1 609 270 B1**
(45) Veröffentlichungstag und Bekanntmachung des Hinweises auf die Patenterteilung: **23.06.2010**
(21) Anmeldenummer: 04720873.1
(22) Anmeldetag: 16.03.2004
(51) Int. Cl.: H04L 12/28, H04L 29/08, H04L 12/56

(54) **Verfahren zur Steuerung der Übertragung von Daten**
Method for controlling the transmission of data
Procédé de commande de transmission de données

(30) Priorität: 02.04.2003 DE 10315066
(43) Veröffentlichungstag der Anmeldung: 28.12.2005
(73) Patentinhaber: Prasendt Investments LLC, Wilmington, DE 19808 (US)
(72) Erfinder: BRÜNINGHAUS, Karsten, 38259 Salzgitter (DE); GRÖTING, Wolfgang, 46149 Oberhausen (DE)
(74) Vertreter: Small, Gary James
(86) Internationale Anmeldenummer: PCT/EP2004/002709
(87) Internationale Veröffentlichungsnummer: WO 2004/088925

(56) Entgegenhaltungen:
- WO-A-01/97458

## Beschreibung

Die Erfindung betrifft ein Verfahren zur Steuerung der Übertragung von Daten gemäß dem Oberbegriff des Anspruchs 1.

Aus der stetig konvergierenden Kommunikations- bzw. Informationstechnik sind Netze, wie beispielsweise ein "Lokal Area Network" LAN, mit einer Vielzahl von zur Datenübertragung ausgestalteter Stationen bekannt, wobei die Übertragung der Daten drahtgebunden, d.h. über die Stationen verbindenden Leitungen, erfolgt, während bei einem gemäß dem IEEE 802.11 Standard ausgebildeten lokalen Netz ("Wireless Local Area Network", WLAN) die Übertragung drahtlos, d.h. über eine Funkstrecke, realisiert wird, wobei bei einem WLAN auch ein hybrides Netz aus über Leitung oder Funkstrecke angebundenen Stationen zulässig ist.

Auf den derartigen, dezentralisierten, nicht deterministischen Netzen angeschlossenen Stationen sind zumeist Applikationen implementiert bzw. zum Teil fest installiert, die verschiedene Dienste umfassen und sich - abhängig von der Art der Station - von Station zu Station unterscheiden können. So hat die Konvergenz von Netzen der Informations- und Kommunikationstechnik zu einer Entwicklung der Netze und Dienste von der Übertragung "zeitunkritischer" Daten wie sie bei einem Filetransfer oder der Übertragung von E-Mails anfallen hin zu Netzen mit "zeitkritischen" Daten geführt, wie beispielsweise die Übertragung von Streaming Media, Sprachdaten ("Voice over IP", VoIP ) und Videokonferenzen, wobei die letztgenannten Dienste unter anderem deswegen so zeitkritisch sind, da Verzögerungen und/oder Datenverluste von einem Nutzer unmittelbar erfasst, d.h. gehört bzw. gesehen werden, und aus diesem Grund möglichst eine Echtzeitübertragung der zugehörigen Daten gefordert ist.

Aus diesem Grund ist im Standard IEEE802.11e eine sogenannte Dienstgüte eingeführt worden. Unter Dienstgüte ("Quality of Service", QoS) versteht man alle Verfahren, die den Datenfluss in LANs und WANs so beeinflussen, dass der Dienst priorisiert wird oder mit einer festgelegten Qualität beim Empfänger ankommt. Der Ansatz der Priorisierung sieht vor, dass zeitkritischen Diensten, wie Video Conferencing, eine höhere Priorität zugeordnet wird als zeitunkritischen, wobei der Priorisierung folgend Datenpakete mit höherer Priorisierung bevorzugt übertragen werden.

Nachteilig bei derartigen Netzen ist es, dass jede der Stationen, bei denen Daten zum Senden bereitstehen, bei gleicher Priorität der zu sendenden Daten das gleiche Recht haben, das Übertragungsmedium zu belegen. Mit steigernder Anzahl der sendenden Stationen nimmt die verfügbare Kapazität des Mediums pro Station kontinuierlich ab, so dass insbesondere Dienstgüteparameter, wie Datenrate und Verzögerung, nicht mehr eingehalten werden können. Gerade im Zusammenhang mit der Bereitstellung zeitkritischer Dienste, wie Sprach- oder Video Streamübertragung, führt dies letztlich dazu, dass keiner dieser Dienste zur Zufriedenheit der Dienstnutzer abgewickelt werden kann.

Aus WO 01/97458 ist ein Verfahren sowie eine Anordnung bekannt, mit der drahtlose Verbindungen einer Vielzahl von Transceivern in einem Netzwerk mit einer Vielzahl von drahtlosen Kommunikationsendgeräten aufgebaut werden kann, wobei hierzu untersucht wird, in welchem Umfang die Transceiver belegt sind und in Abhängigkeit dieser Untersuchung Verbindungen zu den Transceivern derart hergestellt werden, dass in Summe die einzelnen Transceiver mit Verbindungen nicht überlastet werden.

Die der Erfindung zugrundeliegende Aufgabe ist es, ein Verfahren anzugeben, das eine Erhöhung der Nutzerzufriedenheit bei Bereitstellung insbesondere hoch priorisierter Dienste ermöglicht.

Diese Aufgabe wird ausgehend von dem Oberbegriff des Anspruchs 1 durch dessen kennzeichnenden Merkmale gelöst.

Durch das erfindungsgemäße Verfahren wird erreicht, dass bestehende Verbindungen, insbesondere jene, von Applikationen mit hohen Anforderungen an die Dienstgüte, wie beispielsweise Video- oder Sprachdatenübertragung, nicht durch neu hinzukommende Verbindungswünsche von Applikationen gleicher Priortätsklasse beeinträchtigt werden. Auf diese Art wird erreicht, dass die Qualität der bereits gebotenen Dienste weitestgehend konstant bleibt.

Ein sehr einfach zu implementierender Algorithmus ist gegeben, wenn bei bestehender Anforderung des Aufbaus der Datenverbindung durch die erste Station ermittelt wird, ob ein Maß der vorhandenen freien Kanalkapazität einem sich durch die Parameter der ersten Applikation ergebenden Maß notwendiger Kanalkapazität entspricht, wobei Datenverkehr, der Applikationen mit niedrigerer Priorität zugeordnet ist, als die Priorität der ersten Applikation, im Rahmen des Ermittlungsvorgangs als freie Kanalkapazität gewertet wird. Bei positivem Ergebnis der Ermittlung wird die Datenverbindung aufgebaut, bei negativem Ergebnis der Ermittlung der Aufbau der Datenverbindung zumindest temporär suspendiert.

Dabei erfolgt die Wertung als freie Kanalkapazität vorzugsweise auf Basis einer Schwellwertentscheidung. D.h. bis zum Erreichen eines Schwellwerts erfolgt die Wertung als freie Kanalkapazität. Der Schwellwert entspricht dabei im Allgemeinen einem vorher festgelegten Prozentsatz an Datenverkehr, der Applikationen mit niedrigerer Priorität zugeordnet ist. Ein derartiger Schwellwert bietet hierbei den Vorteil, dass er, als Parameter ausgestaltet, den jeweiligen Bedingungen an das System leicht angepasst werden kann.

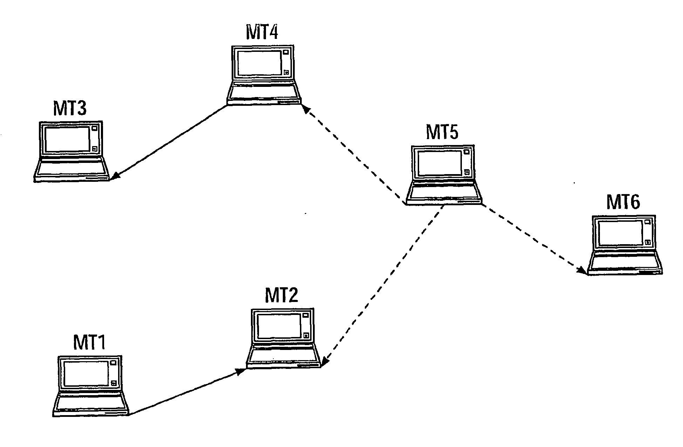

Weitere Einzelheiten sowie Vorteile der Erfindung werden anhand des in der einzigen Figur dargestellten Ausführungsbeispiels erläutert. Dabei zeigt die
- FIGUR: eine beispielhafte Anordnung (Szenario) eines drahtlosen das erfindungsgemäße Verfahren einset- zenden lokalen Netzwerks.

In der Figur sind modellhaft sechs Stationen MT1..MT6 eines drahtlosen eines das erfindungsgemäße Verfahren einsetzenden Netzwerks dargestellt.

Bei diesem Szenario sei angenommen, dass zwischen einer ersten Station MT1 und einer zweiten Station MT2 sowie zwischen einer dritten Station MT3 und einer vierten Station MT4 Daten drahtlos, d.h. über eine definierte Luftschnittstelle übertragen werden (durchgezogene Pfeile), wobei der hierbei anfallende Datenstrom die Kanalkapazität der Luftschnittstelle nicht vollständig ausschöpft, so dass die geforderte Dienstgüte der durch die Datenübertragung zur Verfügung gestellten Dienste, beispielsweise Video- und Sprachdatenübertragung, ohne Einbußen eingehalten wird.

Ausgehend von dieser Ausgangssituation sollen drei mögliche weiterführende Szenarien diskutiert werden.
- Szenario 1:: Eine fünfte Station MT5 will an eine bisher nicht aktive sechste Station MT6 Daten über- tragen.
- Szenario 2:: Die fünfte Station MT5 will an eine Station Daten übertragen, welche bereits hochpriore Daten, z.B. Videoconferencing, empfängt, wie beispielsweise die zweite Station MT2.
- Szenario 3:: Die fünfte Station MT5 will an eine Station Daten übertragen, welche bereits Daten sendet.

Für die folgende Diskussion sei des Weiteren angenommen, dass die Kanalkapazität der Luftschnittstelle für die von der fünften Station anstehenden Daten nicht ohne Qualitätseinbußen für die bereits bestehenden Verbindungen ausreichen würde und dass die Stationen MT2, MT4 und MT6 in der Funkreichweite der Station MT5 liegen.

In so einem Fall könnte bei bestehendem Wunsch nach Datenübertragung seitens der fünften Station MT5 ein interner Datenpuffer der zweiten Station MT2 sowie ein interner Datenpuffer der vierten Station MT4 nicht mehr geleert werden und ein Überlauf würde drohen.

Bei dem Szenario 1 würde bei Feststellung eines Datenüberlaufs die fünfte Station MT5 von der vierten Station MT4 erfindungsgemäß aufgefordert, ihren Datendienst für einen Zeitraum x einzustellen. Wenn die fünfte Station MT5 nach Ablauf dieses Zeitraums x bei ihrem erneuten Versuch der Datenübertragung einen Datenüberlauf herbeiführen würde, erfolgt erfindungsgemäß erneut eine Aufforderung seitens der vierten Station MT4, den Dienst für einen weiteren, um einen diskreten Wert verlängerten, Zeitraum x zurückzustellen.

Falls ein Pufferüberlauf bei der ersten Station MT1 auftritt, würde diese das der zweiten Station MT2 melden, die ihrerseits die Aufforderung zur Suspendierung der Datenübertragung um einen Zeitraum x an die fünfte Station MT5 weitergibt.

Bei Szenario 2 und Szenario 3 kann beispielsweise die Zurückweisung der fünften Station MT5 bei Feststellung eines Kapazitätsengpasses implizit über eine Verweigerung der Sendeerlaubnis, z.B. durch Verweigerung des CTS (clear to send), erfolgen, wobei beim Szenario 2 dafür wiederum eine Mitteilung über einen internen Pufferüberlauf von der ersten Station MT2 an die zweite Station MT2 erforderlich ist.

## Patentansprüche

1. Verfahren zur Steuerung einer Übertragung von Daten über zu unterschiedlichen Applikationen zugeordneten Datenverbindungen über ein Übertragungsmedium in einem, insbesondere lokalen, Netz mit zumindest zwei zur Datenübertragung ausgestalteten Startionen, wobei den Applikationen unterschiedliche Prioritäten sowie unterschiedliche eine Dienstgüte kennzeichnende Parameter zugeordnet werden, **gekennzeichnet durch**
a) eine erste Station baut eine neue zu einer ersten Applikation zugeordneten Datenverbindung ungeachtet der aktuellen Auslastung auf,
b) bei bereits erfolgter Belegung des Übertragungsmediums durch zu einer Applikation mit zumindest einer zweiten der ersten Applikation entsprechenden Priorität zugeordneten Datenverbindungen, **durch** zumindest einer der diese Datenverbindungen aufrechterhaltenden zweiten Station eine Signalisierung derart erfolgt, dass auf das Übertragungsmedium eine Nachricht mit höchster Priorität an die erste Station übermittelt wird,
c) die erste Station nach Erhalt der Nachricht, die neue Datenverbindung zumindest temporär suspendiert.

2. Verfahren nach dem Anspruch 1, **dadurch gekennzeichnet, dass** bei negativem Ergebnis des Verbindungsaufbaus eine Verzögerungszeit gesetzt wird, nach deren Ablauf die Schritte a) bis c) wiederholt werden.

3. Verfahren nach Anspruch 2, **dadurch gekennzeichnet, dass** nach jeder Wiederholung die Verzögerungszeit um einen diskreten Wert verlängert wird.

4. Verfahren nach Anspruch 2 oder 3, **dadurch gekennzeichnet, dass** die Wiederholung solange erfolgt, bis ein Aufbau der neuen Datenverbindung zugelassen wird oder durch Erreichen einer Abbruchbedingung der Aufbauversuch endgültig unterbleibt.

## Claims

1. Process for controlling a transfer of data via data connections associated with different applications via a transfer medium in a particularly local network having at least two stations designed for data transfer, wherein different priorities as well as different parameters characterising the service quality are associated with the applications, **characterised in that**
a) a first station establishes a new data connection to a first application, irrespective to current load,
b) during already existing occupation of the transfer medium by data connections associated with an application having at least a second priority equivalent to the first application, a signaling is effected by means of at least one second station maintaining this data connection such that a message with highest priority is transferred on the transfer medium to the first station,
c) the first station suspends the new data connection at least temporarily after receiving the message.

2. Process according to claim 1, **characterised in that** a delay time is set in case of a negative result of the connection establishment, after which the steps a) to c) are repeated.

3. Process according to claim 1, **characterised in that** after each repetition the delay time is extended by a discrete value.

4. Process according to claim 2 or 3, **characterised in that** the repetition is carried out until an establishment of the new data connection is admitted or the trial is finally terminated by reaching a termination condition.

## Revendications

1. Un procédé permettant de commander une transmission de données grâce à des liaisons de données affectées à diverses applications par le biais d'un support de transmission dans un réseau, en particulier local, comportant au moins deux stations équipées à des fins de transmission de données et où les applications se voient attribuer différentes priorités ainsi que différents paramètres correspondant à une qualité de service, **caractérisé en ce que**
a) une première station crée une nouvelle liaison de données attribuée à une première application quel que soit la charge d'utilisation courante,
b) une signalisation apparaît lorsque le support de transmission est déjà utilisé par des liaisons de données liées à une application présentant au moins une deuxième priorité correspondant à la première application, par le biais d'une deuxième station qui maintient au moins l'une de ces liaisons de données, selon laquelle un message de la plus haute priorité est transférée à la première station par le support de transmission.
c) la première station suspend, au moins temporairement, la nouvelle liaison de données après réception de l'information.

2. Procédé selon la Revendication 1 **caractérisé en ce que**, en cas de résultat négatif de la création de liaison, un délai d'attente est fixé de manière à ce qu'après écoulement de ce délai d'attente, les étapes a) à c) soient répétées.

3. Procédé selon la Revendication 2 **caractérisé en ce qu'**après chaque répétition des étapes, le délai d'attente est augmenté d'une valeur discrète.

4. Procédé selon la Revendication 2 ou 3 **caractérisé en ce que** la répétition est effectuée jusqu'à ce que la création de la nouvelle liaison de données soit autorisée ou jusqu'à ce que la tentative de création soit définitivement interrompue parce qu'une condition d'interruption a été atteinte.
